# EUROPÄISCHE PATENTSCHRIFT

(11) **EP 1 159 194 B1**
(45) Veröffentlichungstag und Bekanntmachung des Hinweises auf die Patenterteilung: **28.05.2003**
(21) Anmeldenummer: 00915169.7
(22) Anmeldetag: 04.03.2000
(51) Int. Cl.: B64F 1/305

(54) **FLUGGASTBRÜCKE**
TELESCOPIC GANGWAY
PASSERELLE POUR LES PASSAGERS D'UN AVION

(30) Priorität: 17.03.1999 DE 19911881
(43) Veröffentlichungstag der Anmeldung: 05.12.2001
(73) Patentinhaber: Thyssen Henschel Airport Systems GmbH, 34127 Kassel (DE)
(72) Erfinder: WORPENBERG, Friedhelm, D-34128 Kassel (DE); SCHARF, Lothar, D-37242 Bad Soden-Allendorf (DE)
(74) Vertreter: Dahlkamp, Heinrich-Leo, Dipl.-Ing.
(86) Internationale Anmeldenummer: EP0001920
(87) Internationale Veröffentlichungsnummer: WO00055040

(56) Entgegenhaltungen:
- WO-A-00/09395
- DE-A- 1 963 983
- DE-A- 2 057 464
- DE-A- 19 717 386
- US-A- 5 105 495

## Beschreibung

Die Erfindung bezieht sich auf eine Fluggastbrücke gemäß Oberbegriff des Anspruches 1.

Aus der DE OS 20 57 464 ist eine ortsfeste Fluggastbrücke zum Be- und Entladen von senkrecht zum Flughafengebäude aufgestellten Flugzeugen mit einem etwa parallel zum Flugzeugrumpf über die Tragfläche hinwegreichenden Brückenteil und mehreren daran um 90° versetzt angeordneten, in Brückenlängsrichtung verschiebbaren Treppenaufgängen mit Kabinen zur seitlichen Anlage am Flugzeugrumpf bekannt. Der Brückenträger ist dabei über ein aufwendiges Fachwerk an ortsfesten Pylonen aufgehängt und die Treppenaufgänge sind am freien Ende höhenverstellbar und auf Lauf- und Führungsschienen in Längsrichtung des Brückenträgers verschiebbar gelagert. Diese Brückenkonstruktion ist sehr aufwendig und nur für begrenzte einheitliche Flugzeuge verwendbar.

Bekannt ist auch eine sogenannte 'over-the-wing'-Fluggastbrücke, bei der die teleskopierbaren Tunnelteile mit der am Ende angeordneten Kabine in einer auf dem Vorfeld verankerten starren Tragkonstruktion höhenverstellbar und um max. 30° schwenkbar aufgehängt sind (vgl. Aviobridge MK-11 "over-the-wing" bridge, Flughafen Amsterdam Schiphol + DE OS 19 63 983).

Die DE 197 17 386 A1 zeigt eine Mehrfach-Fiuggastbrücke für Ein- und Aussteigen der Fluggäste von Großraumflugzeugen mit einem Brückenausleger und einer Rampenbrücke, welche vertikal verfahrbar an einem Turm oder Rahmen aufgehängt sind. Bei einer Ausführungsform ist hierbei der Brückenausleger in zwei vertikal verfahrbaren Tragrahmen aufgehängt, wobei ein innerer Rahmen um eine außermittige vertikale Achse drehbar an einer Stützsäule gelagert ist und ein äußerer Rahmen über tangential angeordnete Bodenrollen verfahrbar ist. Durch die dezentrale Anordnung der vertikalen Achse ist hierbei aber der Schwenkbereich auf max. 30° begrenzt, so daß die Fluggastbrücke nur begrenzt einsatzfähig ist.

Der Erfindung liegt die Aufgabe zugrunde, eine besonders variable Fluggastbrücke vorzuschlagen, mittels derer in Kombination mit einer ausschließlich die Bugtür bedienenden Fluggastbrücke entweder narrowbody-Flugzeuge an der seitlichen Hecktür oder wide-body- und Doppelstock-Flugzeuge an der hinter dem Flügel angeordneten Tür oder an einer der mittleren Türen des Oberdeckes bzw. wide-body-Flugzeuge auch an der vor dem Flügel angeordneten Tür abgefertigt werden können.

Die Lösung dieser Aufgabe ist im Patentanspruch 1 angegeben. Die Unteransprüche 2 bis 7 enthalten sinnvolle Ausführungsformen dazu.

Erfindungsgemäß ist vorgesehen, daß der über den bzw. entlang dem Flügel führende Teil der Fluggastbrücke, bestehend aus dem Ausleger und dem daran aufgehängten bzw. unmittelbar daran befestigten teleskopierbaren Tunnel mit der Kabine, an einem den Brückentunnel umgebenden Portalrahmen befestigt ist, der um eine zentrale senkrechte Drehachse auf einem vor dem Flügel fest auf dem Vorfeld verankerten Standbein schwenkbar ist. Der Brückentunnel ist dabei in waagerechter Schwenkrichtung fest mit dem Portalrahmen verbunden. Zusätzlich kann das kabinenseitige Ende der Fluggastbrücke um eine im Bereich des Portalrahmens angeordnete waagerechte Drehachse mit Hilfe von entweder am vorfeldseitigen oder am terminalseitigen Ende des Auslegers gelenkig befestigten Hubzylindem oder sonstigen mechanischen Verstelleinrichtungen in der Höhe verstellt werden.

Je nach Kategorie der abzufertigenden Flugzeuge kann ein kurzes oder langes Standbein vorgesehen werden, um die Verstellung der Kabinenhöhe möglichst gering zu halten. Der Portalrahmen kann erfindungsgemäß auf einem Kugeldrehkranz auf dem Standbein gelagert sein. Mit Hilfe von an Lagerarmen angreifenden, beidseitig wirkenden Hubzylindem oder sonstigen Verstelleinrichtungen kann der Portalrahmen bis maximal 180° verschwenkt werden. Mit Hilfe dem am Ende des Auslegers angeordneten Hubzylinder kann der Brückentunnel mit den daran befestigten Teilen um bis zu 45° gegenüber dem annähernd horizontalen Vorfeld angehoben bzw. abgesenkt werden.

Das Gewicht des zum Flugzeug zeigenden Teiles der Fluggastbrücke wird zweckmäßigerweise mit einem am Ausleger befestigten Gegengewicht ausbalanciert. Bei einer entsprechend biegesteifen Ausführung des Standbeines, des Kugeldrehkranzes und des Portalrahmens kann allerdings auf das Gegengewicht mit dem dahin auskragenden Teil des Auslegers verzichtet werden.

Aus Sicherheitsgründen hat es sich als günstig erwiesen, an der Unterseite der über den Flügel schwenkenden Teile, insbesondere des Brückentunnels, eine Anzahl von Abstandsmeßgeräten oder Tastern oder Kontakten vorzusehen, die bei Berührung bzw. unzulässiger Annäherung die über die Flügel schwenkenden Teile automatisch anheben.

Die erfindungsgemäße Brückenkonstruktion kann insbesondere auch für die Abfertigung von Passagierschiffen eingesetzt werden.

Die Erfindung wird anhand der beigefügten Figuren 1 bis 4 beispielsweise näher erläutert. Es zeigen:
- Figur 1: eine perspektivische Darstellung der an die seitliche Hecktür eines 'narrow-body' Flugzeuges angedockten Fluggastbrücke mit kurzem Standbein, ergänzt um einen an die Bugtür angedockten 'nose-loader' 18 sowie einen mit dem Flughafenterminal verbundenen festen Verbindungssteg 14;
- Figur 2: eine perspektivische Darstellung der an die hinter dem Flügel befindliche Tür des Hauptdeckes bzw. an eine der mittleren Türen des Oberdecks eines zukünftigen Doppelstock-Flugzeuges angedockten Fluggastbrücke mit langem Standbein;
- Figur 3: eine perspektivische Darstellung der Fluggastbrücke mit daran angeschlossenem festen Verbindungssteg 14 als Ansicht vom Vorfeld aus in Richtung zum nicht dargestellten Flugzeug;
- Figur 4: eine andere perspektivische Darstellung der Fluggastbrücke mit an dem festen Verbindungssteg 4 angeschlossenem 'nose-loader' 18 vom Vorfeld aus gesehen;
- Figur 5: eine perspektivische Darstellung einer wahlweise an die seitliche Hecktür eines Narrowbody-Flugzeuges bzw. an die vor dem Flügel befindliche Tür eines Widebody-Flugzeuges angedockte Fluggastbrücke ohne Gegengewicht und einen dabei auskragenden Ausleger;
- Figur 6: eine perspektivische Darstellung der in Figur 5 gezeigten Fluggastbrücke mit angeschlossenem festen Verbindungssteg 14 als Ansicht vom Vorfeld in Richtung zum nicht dargestellten Flugzeug;
- Figur 7: eine andere perspektivische Darstellung der in Figur 5 gezeigten Fluggastbrücke vom Vorfeld aus gesehen.

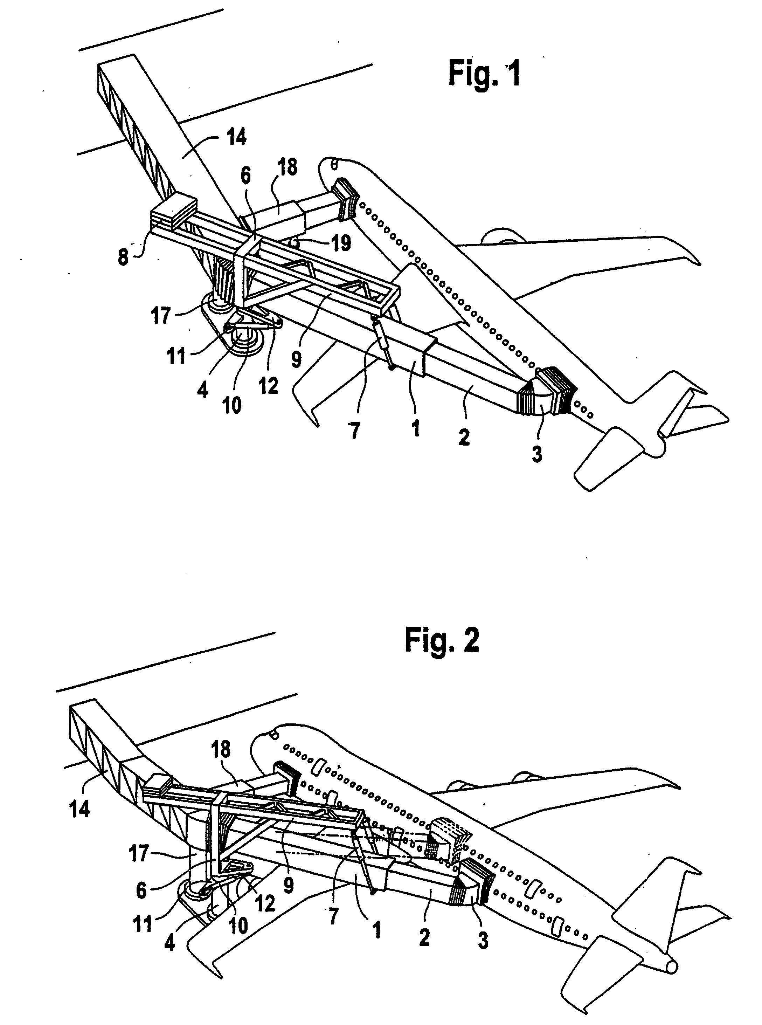

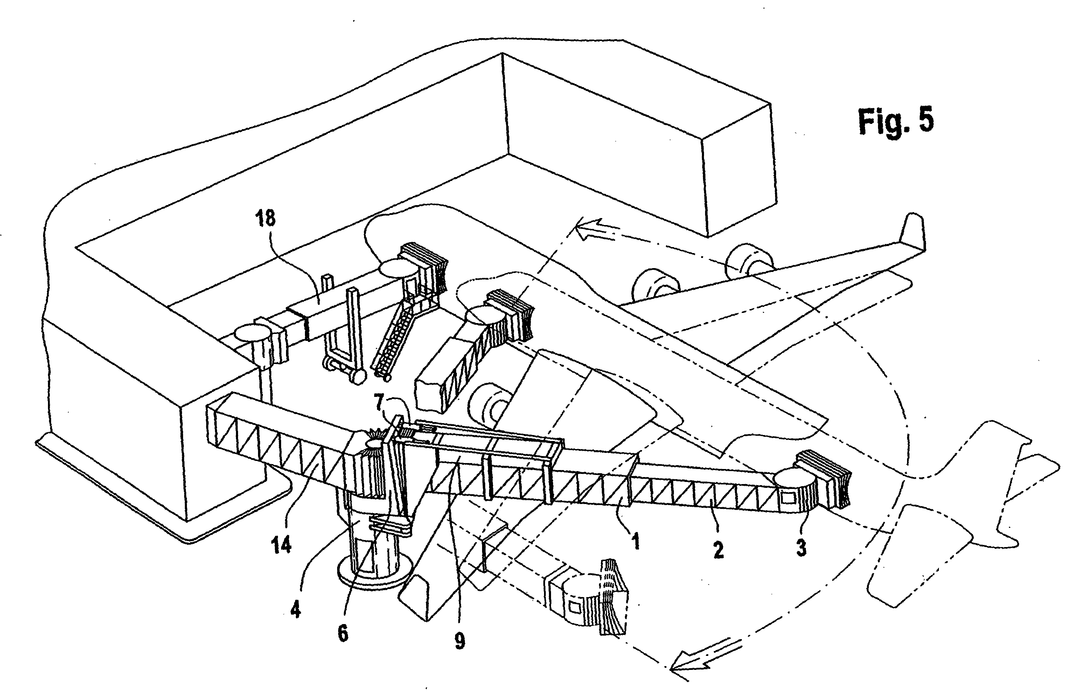

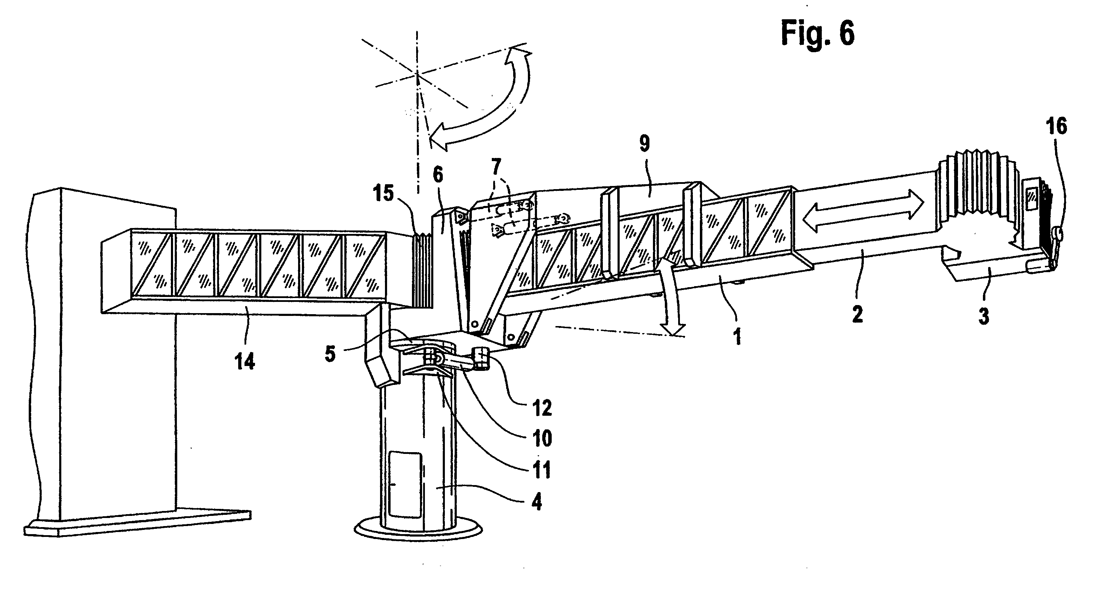

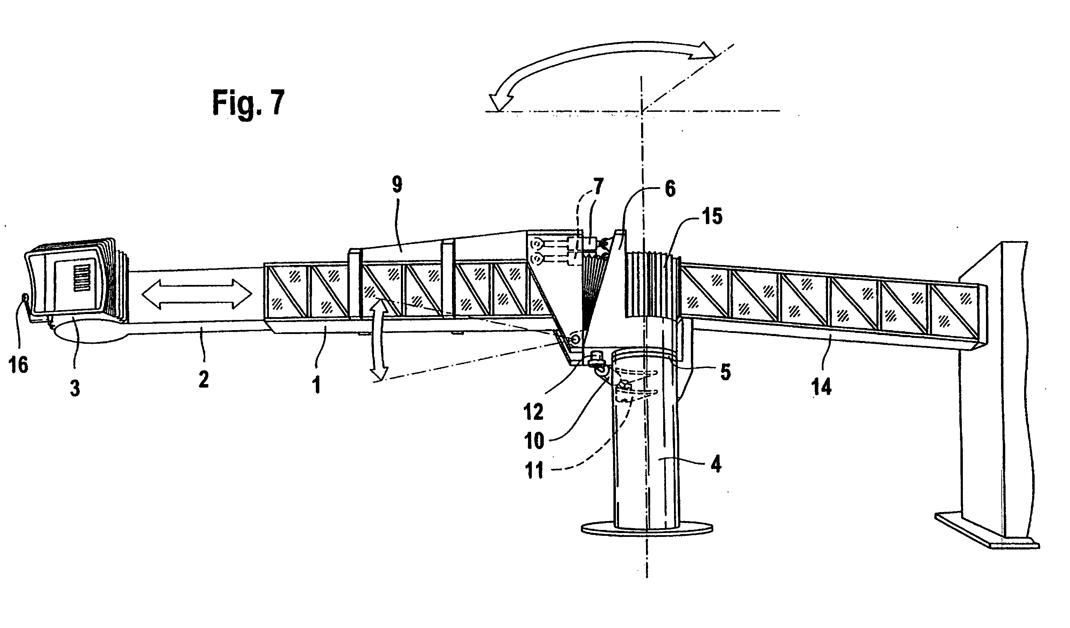

Die Figuren zeigen anschaulich nur die für die Erfindung relevanten Bauteile der Fluggastbrücke. Die über die (Figur 1, 2 und 5) bzw. entlang der (Figur 5) Tragfläche führenden, teleskopierbaren Tunnel 1 und 2 mit der am flugzeugseitigen Tunnelende beweglich angebrachten Kabine 3 sind insgesamt um das auf dem Vorfeld verankerte Standbein 4 mittels Kugeldrehkranz 5 schwenkbar. Dabei ist auf dem Kugeldrehkranz ein im wesentlichen rechteckiger oder quadratischer Portalrahmen 6 um eine senkrechte Achse um bis zu 180° schwenkbar. Durch den Portalrahmen 6 verläuft der Brückentunnel 1, der etwa im Bereich dieses Portalrahmens um eine im wesentlichen waagerechte Drehachse schwenkbar ist. Der Ausleger 9 ist entweder fest (Figuren 1 bis 4) oder beweglich (Figuren 5 bis 7) mittels zweier Hubzylinder 7 mit dem Portalrahmen 6 verbunden. Im ersteren Fall befindet sich der waagerechte Ausleger 9 mit dem hinteren Gegengewicht 8 am oberen Ende des Portalrahmens 6, im letzteren Fall ist der vorzugsweise als Kragträger ausgebildete Ausleger 9 unten gelenkig mit dem Portalrahmen 6 verbunden. Bei der in den Figuren 1 bis 4 dargestellten beispielhaften Ausführungsform ist der Brückentunnel 1 über zwei Hubzylinder 7 gelenkig und höhenverstellbar an dem der Kabine 3 zugewandten Ende des Auslegers 9 aufgehängt. Bei der in den Figuren 5 bis 7 dargestellten beispielhaften Ausführungsform ohne Gegengewicht und einen auskragenden Ausleger ist dagegen der zur Kabine 3 hin auskragende Ausleger 9 unten gelenkig und oben mittels zweier Hubzylinder 7 höhenverstellbar mit dem Portalrahmen 6 verbunden.

Das Schwenken der gesamten Fluggastbrücke um das Standbein 4 erfolgt vorzugsweise über einen in beiden Richtungen wirksamen Hubzylinder 10, der jeweils gelenkig an auskragenden Lagerarmen 11 und 12 am Standbein 4 und am Portalrahmen 6 befestigt ist. Anstelle des Hubzylinders 10 kann das Schwenken der Fluggastbrücke auch über einen z. B. bei Turmdrehkränen üblichen, in den verzahnten Kugeldrehkranz 5 eingreifenden elektromotorischen Schwenkantrieb erfolgen. Am Standbeinfuß bzw. im Standbein 4 befindet sich das Hydraulikaggregat 13 für die Schwenk- und Hubzylinder 10 und 7.

Die flexible Verbindung zwischen dem Brückentunnel 1 und dem festen Verbindungssteg 14 kann durch einen Faltenbalg 15 bzw. über eine bei Fluggastbrücken sonst übliche Rotunde mit vertikalen Rollwänden erfolgen. Die Unterseite des über den Flügel führenden Brückentunnels 1 wird mit einer ausreichenden Zahl von Abstandsmeßgeräten, Tastern oder Kontakten versehen, die bei Berührung bzw. unzulässig enger Näherung die Brücke automatisch nach oben bewegen. Im übrigen übernimmt nach korrekter Andockung der Fluggastbrücke an die Flugzeugtür das Fühlrad 16 die automatische Höhennachregulierung.

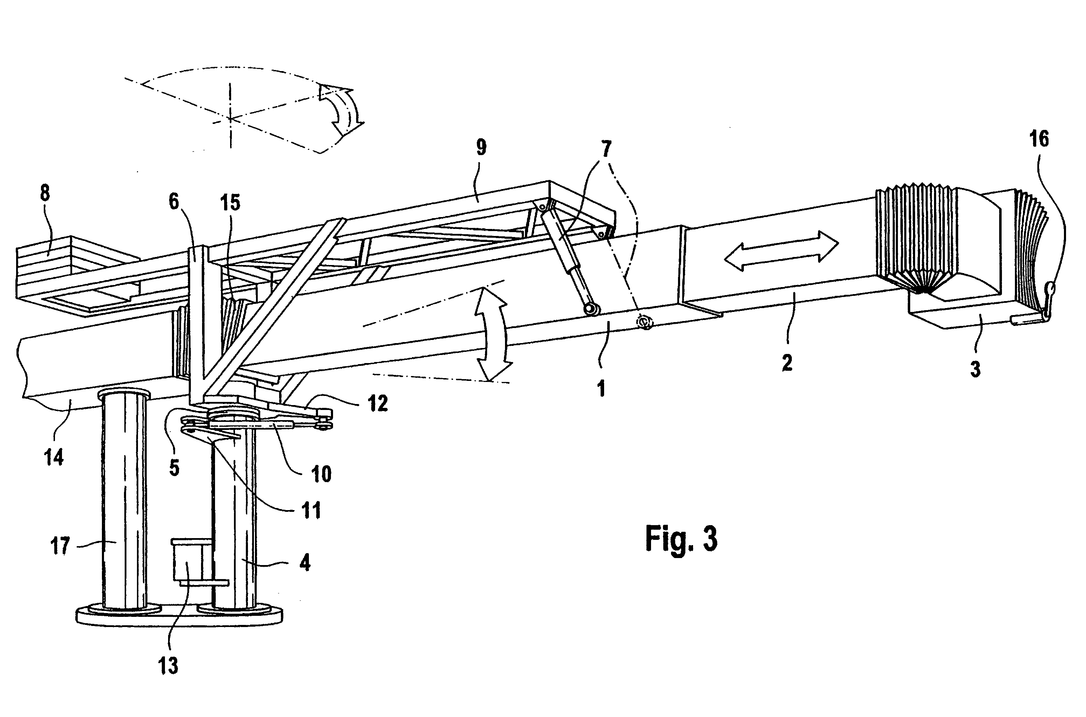

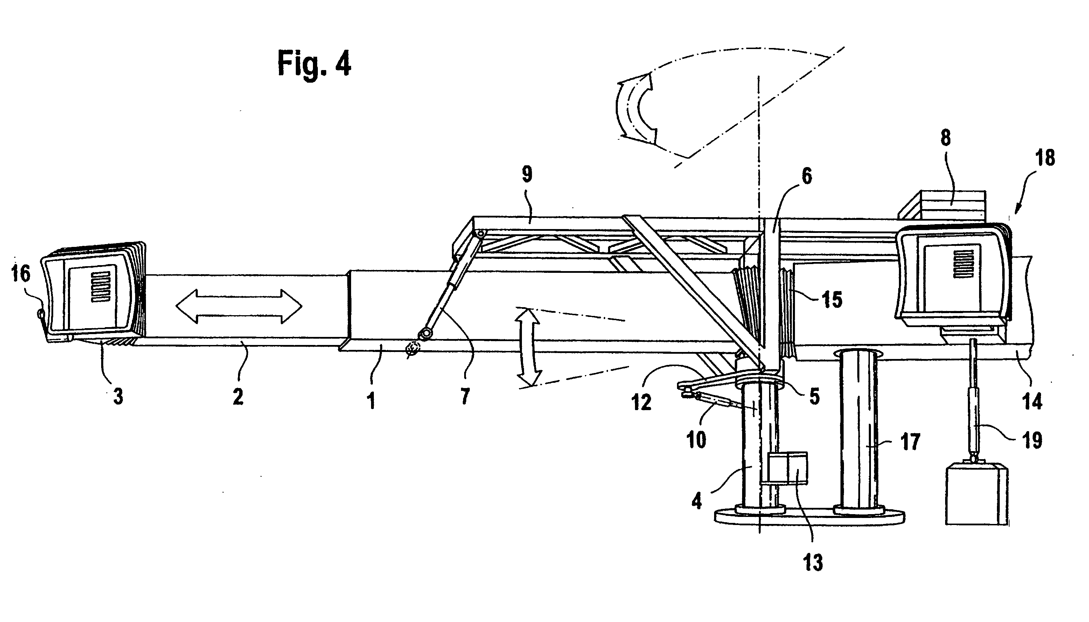

In Figur 4 ist zusätzlich eine feste Stütze 17 für den Verbindungssteg 14 dargestellt. An diesem Verbindungssteg 14 befindet sich für die Abfertigung der Bugtür zusätzlich eine an sich bekannte 'nose-loader' Brücke 18 mit einer Höhenverstellung 19. In den Figuren 3 und 4 sind zusätzlich mit Doppelpfeilen die Bewegungsrichtungen der Fluggastbrücke angedeutet.

Figur 5 zeigt einen Verbindungssteg 14 der sich unmittelbar auf einem an dem Standbein 4 auskragenden Konsolträger abstützt. Weiterhin ist zur Abfertigung der Bugtür zusätzlich eine an sich bekannte Teleskopbrücke 18 dargestellt. In den Figuren 3, 4,6 und 7 sind zusätzlich mit Doppelpfeilen die Bewegungsrichtungen der Fluggastbrücken angedeutet

### Bezugszeichenliste

- (1): Brückentunnel
- (2): innerer Tunnel, in (1) teleskopierbar
- (3): Kabine am Ende von (2)
- (4): Standbein
- (5): Kugeldrehkranz
- (6): Portalrahmen
- (7): Hubzylinder zwischen (1) und (9) bei Figuren 1 bis 4 bzw. zwischen (6) und (9) bei Figuren 5 bis 7
- (8): Gegengewicht
- (9): Ausleger
- (10): Hubzylinder zwischen (11) und (12)
- (11): Lagerarm an (4)
- (12): Lagerarm an (6)
- (13): Hydraulikaggregat für (10) und (7)
- (14): fester Verbindungssteg zwischen Flughafengebäude und (17) bei Figuren 1 bis 4 bzw. zwischen Flughafengebäude und (4)
- (15): Faltenbalg zwischen (1) und (14)
- (16): Fühlrad an (3)
- (17): feste Stütze von (14)
- (18): Brücke für vordere Tür des Flugzeuges (nose loader bzw. Teleskopbrücke)
- (19): Höhenverstellung für (18)

## Patentansprüche

1. Fluggastbrücke zur Abfertigung der Passagiere von vorwärts (nose-in) eingeparkten ein- oder doppelstöckigen Passagierflugzeugen an jeweils mindestens einer der vor, über oder hinter dem Flügel befindlichen Türen des Haupt- bzw. Oberdecks mit
a) über den Flügel des Flugzeuges schwenkbaren, teleskopierbaren Tunnelelementen (1, 2) mit einer an die Flugzeugtür heranfahrbaren Kabine (3),
b) einem das nicht verschiebbare Tunnelelemente (1) umgebenden Portalrahmen (6),
c) einem starr oder beweglich an dem Portalrahmen (6) befestigten Ausleger (9), an dem die teleskopierbaren Tunnelelemente (1, 2) bei starr befestigtem Ausleger (9) höhenverstellbar oder bei beweglichen Ausleger (9) gemeinsam mit dem Ausleger (9) höhenverstellbar aufgehängt sind und
d) einem mit ausreichendem Sicherheitsabstand zum Flügel und Triebwerk des geparkten Flugzeuges angeordneten Standbein (4), auf dem der Portalrahmen (6) um eine mittig auf der Längsachse der Tunnetelemente (1, 2) angeordnete, senkrechte Drehachse um einen Winkel von 180° schwenkbar gelagert ist.

2. Fluggastbrücke nach Anspruch 1, **dadurch gekennzeichnet, daß** der Portalrahmen (6) mit einem Kugeldrehkranz (5) auf dem Standbein (4) gelagert ist.

3. Fluggastbrücke nach Anspruch 1 oder 2, **dadurch gekennzeichnet, daß** zum Schwenken der Fluggastbrücke um das Standbein (4) am Standbein (4) und dem Portalrahmen (6) jeweils auskragende Lagerarme (11, 12) befestigt sind, zwischen denen in beiden Richtungen wirksame Hubzylinder (10) oder sonstige bei Turmdrehkränzen übliche Schwenkantriebe gelenkig befestigt sind.

4. Fluggastbrücke nach Anspruch 1, 2 oder 3, **dadurch gekennzeichnet, daß** zur Höhenverstellung des flugzeugseitigen Endes der Fluggastbrücke jeweils ein oder mehrere Hubzylinder (7) oder mechanische Spindelantriebe entweder am Brückentunnel (1) und am flugzeugseitigen Ende des starren Auslegers (9) oder am oberen Ende des Portalrahmens (6) sowie am terminalseitigen oberen Ende des beweglichen Auslegers (9) gelenkig befestigt sind.

5. Fluggastbrücke nach einem der Ansprüche 1 bis 4, **dadurch gekennzeichnet, daß** an der der Kabine (3) abgewandten Seite des starr mit dem Portalrahmen (6) verbundenen Auslegers (9) ein Gegengewicht (8) angeordnet ist.

6. Fluggastbrücke nach einem der Ansprüche 1 bis 5, **dadurch gekennzeichnet, daß** der Ausleger (9) um bis zu 180° um eine senkrechte Drehachse und der Brückentunnel (1) um eine waagerechte, im Bereich des Portalrahmens (6) angeordnete Drehachse gegenüber dem annähernd horizontalen Vorfeld um bis zu 45° heb- und senkbar ist.

7. Fluggastbrücke nach einem der Ansprüche 1 bis 6, **dadurch gekennzeichnet, daß** an der Unterseite des über den Flügel des Flugzeuges schwenkbaren Brückentunnels (1) und/oder inneren Tunnels (2) und/oder der Kabine (3) Abstandsmeßgeräte oder Taster angeordnet sind, um eine Berührung des Flügels zu verhindern oder bei unzulässiger Annäherung den Brückentunnel (1) automatisch entsprechend anheben.

## Claims

1. A telescopic gangway for handling the passengers of single-deck or double-deck passenger airplanes parked nose-in at least at one of the doors of the main deck or upper deck, respectively, which doors are located in front of, above, or behind the wing, said telescopic gangway comprising:
a) tunnel elements (1,2) pivotable over the wing of the airplane and telescoping with a cabin (3) movable up to the door of the airplane,
b) a portal frame (6) surrounding said non-displaceable tunnel element (1),
c) an extension arm (9) rigidly or movably fastened to said portal frame (6), said telescoping tunnel elements (1,2) being suspended in a height-adjustable manner on said extension arm (9) with said extension arm (9) rigidly fastened or being suspended in a height-adjustable manner together with said extension arm (9) movably connected, and
d) a leg (4) mounted on the ground and arranged at a sufficiently safe distance from the wing and the engine of the parked airplane, on which leg the portal frame (6) is mounted pivotably by an angle of 180° around a vertical axis of rotation arranged centrally on the longitudinal axis of said tunnel elements (1,2).

2. A telescopic gangway in accordance with claim 1, **characterized in that** said portal frame (6) is mounted in a ball type rim bearing (5) on said leg (4).

3. A telescopic gangway in accordance with claim 1 or 2, **characterized in that** protruding cantilevered bearing arms (11,12) are mounted to said leg (4) and said portal frame (6) each for pivoting the passenger gangway around said leg (4), there being lifting cylinders (10) or other swivel drives commonly used for tower slewing cranes and effectively working in both directions are fastened in articulated manner between said bearing arms.

4. A telescopic gangway in accordance with claim 1, 2, or 3, **characterized in that** one or more lifting cylinders (7) or mechanical spindle drives are fastened in articulated manner either to said gangway tunnel element (1) and to the airplane-side end of said rigid extension arm (9) or to a top end of said portal frame (6) as well as to the terminal-side top end of the movable extension arm (9) for adjusting the height of the airplane-side end of the telescopic gangway.

5. A telescopic gangway in accordance with any of claims 1 to 4, **characterized in that** a counterweight (8) is arranged on a side of said extension arm (9) rigidly connected to said portal frame (6), said side facing away from said cabin (3).

6. A telescopic gangway in accordance with any of claims 1 to 5, **characterized in that** said extension arm (9) can be pivoted by up to 180° around a vertical axis of rotation and said gangway tunnel element (1) be raised and lowered by up to 45° in relation to an approximately horizontal apron around a horizontal axis of rotation arranged in the area of said portal frame (6).

7. A telescopic gangway in accordance with any of claims 1 to 6, **characterized in that** distance-measuring devices or sensors are arranged on an underside of said gangway tunnel element (1) being pivotable over the wing of the airplane and/or of said inner tunnel (2) and/or cabin (3) in order to prevent a contact with the wing or to automatically raise the gangway tunnel element (1) correspondingly in case of an unacceptable approach.

## Revendications

1. Passerelle pour les passagers d'un avion pour l'embarquement des passagers d'avions de passagers à un ou deux étages garés de l'avant (nose-in) par au moins une des portes du principal ou supérieur se trouvant devant, au-dessus ou derrière l'aile avec
a) des éléments tunnels (1, 2) pouvant être pivotés et télescopés au-dessus des ailes avec une cabine (3) qui peut être amenée à la porte de l'avion,
b) un portique (6) entourant l'élément tunnel qui ne peut pas être déplacé,
c) une flèche (9) fixée de manière rigide ou mobile au portique (9), à laquelle les éléments tunnels télescopables (1, 2 ) sont suspendus de manière à pouvoir être réglés en hauteur s'il s'agit d'une flèche (9) fixée rigidement ou suspendus en commun avec la flèche (9) de manière à pouvoir être réglés en hauteur s'il s'agit d'une flèche mobile (9).
d) une béquille (4) disposée à une distance de sécurité suffisante de l'aile et du propulseur de l'avion stationné sur laquelle le portique (6) pivote autour d'un angle de 180° autour d'un axe de rotation vertical disposé au centre sur l'axe longitudinal des éléments tunnels (1, 2).

2. Passerelle pour les passagers d'un avion selon la revendication 1, **caractérisée en ce que** le portique (6) est logé sur la béquille (4) avec une couronne de pivotement à billes (5).

3. Passerelle pour les passagers d'un avion selon la revendication 1 ou 2 **caractérisée en ce que** des bras de palier (11, 12) en porte-à-faux sont fixés sur la béquille (4) et le portique (6) pour permettre de pivoter la cabine pour passagers, des vérins de levage (10) ou autres mécanismes de pivotement courants pour les couronnes de pivotement à tour et agissant dans les deux sens étant articulés entre ces deux bras de palier.

4. Passerelle pour les passagers d'un avion selon la revendication 1, 2 ou 3, **caractérisée en ce que** pour le réglage en hauteur de l'extrémité de la passerelle côté avion un ou plusieurs vérins de levage (7) ou commandes à broche mécanique sont articulés soit au tunnel de portique (1) et à l'extrémité côté avion de la flèche (9) rigide ou à l'extrémité supérieure du portique (6) ainsi qu'à l'extrémité supérieure de la flèche (9) mobile côté terminal.

5. Passerelle pour les passagers d'un avion selon l'une des revendications 1 à 4, **caractérisée en ce qu'**un contrepoids (8) est disposé sur le côté opposé à la cabine (3) de la flèche (9) raccordée de manière rigide au portique (6).

6. Passerelle pour les passagers d'un avion selon l'une des revendications 1 à 5, **caractérisée en ce que** la flèche (9) peut être levée et descendue de jusqu'à 180° autour d'un axe de rotation vertical et le tunnel de portique de jusqu'à 45° par rapport à l'aire de stationnement presque horizontal autour d'un axe de rotation horizontal disposé dans la zone du portique (6).

7. Passerelle pour les passagers d'un avion selon l'une des revendications 1 à 6, **caractérisée en ce que** des appareils de mesure de distance ou des capteurs sont installés sur la face inférieure du tunnel de portique (1) pivotable au-dessus des ailes de l'avion et/ou du tunnel intérieur (2) et/ou de la cabine (3) pour empêcher un contact de l'avion ou pour soulever le tunnel de portique (1) automatiquement en conséquence en cas d'approchement inadmissible.
